(19) Europäisches Patentamt
European Patent Office
Office européen des brevets

(11) **EP 4 141 621 B1**

(12) **EUROPEAN PATENT SPECIFICATION**

(45) Date of publication and mention
of the grant of the patent:
**15.07.2026 Bulletin 2026/29**

(21) Application number: **21803436.1**

(22) Date of filing: **08.05.2021**

(51) International Patent Classification (IPC):
***G06T 5/80*** *(2024.01)*

(52) Cooperative Patent Classification (CPC):
**G06T 5/80; G06F 3/013;** G02B 27/0093;
G02B 27/01; G06T 2207/30268

(86) International application number:
**PCT/CN2021/092269**

(87) International publication number:
**WO 2021/227969 (18.11.2021 Gazette 2021/46)**

(54) **DATA PROCESSING METHOD AND DEVICE THEREOF**

DATENVERARBEITUNGSVERFAHREN UND VORRICHTUNG DAFÜR

PROCÉDÉ DE TRAITEMENT DE DONNÉES ET DISPOSITIF CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2020 CN 202010415230**

(43) Date of publication of application:
**01.03.2023 Bulletin 2023/09**

(73) Proprietor: **Yinwang Intelligent Technologies Co.,
Ltd.
Shenzhen, Guangdong 518110 (CN)**

(72) Inventors:
• **SONG, Biwei
Shenzhen, Guangdong 518129 (CN)**
• **LIU, Xin
Shenzhen, Guangdong 518129 (CN)**
• **YAN, Yunfei
Shenzhen, Guangdong 518129 (CN)**

(74) Representative: **Maiwald GmbH
Engineering
Elisenhof
Elisenstrasse 3
80335 München (DE)**

(56) References cited:
WO-A1-2012/034767     CN-A- 109 803 133
CN-U- 209 542 964     KR-A- 20170 135 522
US-A1- 2019 025 815

Description

## TECHNICAL FIELD

Embodiments of this application relate to the field of computer vision technologies, and in particular, to a data processing method and a device thereof.

## BACKGROUND

KR20170135522Arelates to a control device for a vehicle and a control method thereof, wherein the control method includes: sensing a drivers eye position; selecting one distortion correction function corresponding to the sensed eye position from a plurality of distortion correction functions stored in a memory; and correcting an image being output toward a windshield of a vehicle using the selected distortion correction function.

CN209542964U describes a head-up display device. It is described that the head-up display device comprises an eyeball tracking device, an adjuster and image projection equipment, wherein the eyeball tracking device is electrically connected with the regulator, the image projection equipment is electrically connected with the regulator, and image distortion correction is carried out on an image source in the image projection equipment through the regulator according to eyeball positions of left and right eyes in an eye box area, which are obtained in the eyeball tracking device.

An augmented reality-head up display (AR-HUD) projects driving assistance information (digital, picture, animation, and the like) onto a front windshield of a vehicle by using an optical projection system, to form a virtual image. A driver can observe corresponding driving assistance information by using a display area of the windshield.

Because of different windshield specification curvatures, the virtual image projected on the windshield by the optical projection system tends to be distorted. To eliminate this type of distortion, a human eye simulation device is disposed near a head of the driver in a preparation stage before the AR-HUD is formally put into use. The human eye simulation device can simulate a position of an eye of the driver, photograph in a driving area a calibration image projected by an AR-HUD display system, calculate a distortion amount of the calibration image by using a position of a reference point on the calibration image, and perform image correction by using the distortion amount.

Because the human eye simulation device is basically fastened, the reference point in the photographed calibration image is also basically fastened. When the AR-HUD is formally put into use, a position of the driver often changes, for example, a replacement of the driver and an adjustment of a seat. When the position of the driver changes, a position of a human eye of the driver at this time is different from a position of the human eye simulation device in the preparation stage. Therefore, a corrected projected virtual image viewed by the driver may still be distorted, leading to a poor effect of the projected virtual image viewed by the driver.

## SUMMARY

Embodiments of this application provide a data processing method and a device thereof that may be applied to a human-computer interaction system, for example, a human-computer interaction system in a vehicle. The methods provided in embodiments of this application are used to correct in real time a distorted projected virtual image, so that user experience is improved.

Appended claim 1 defines a data processing method. Appended claim 4 defines a display device. Appended claim 5 defines a human-computer interaction system. Appended claim 6 defiens a readable storage medium. The invention and its scope of protection is defined by these independent claims. The following aspects and implementations of the summary provide examples of how techncial subject matters cn be combined.

A first aspect of embodiments of this application provides a data processing method.

In a process in which a human-computer interaction system is put into use, a first device receives first position information sent by a second device. The first position information includes position information of a first feature in a preset coordinate system, and the first feature represents feature information of a user collected by the second device.

The first device obtains a first pre-distortion model based on the first position information sent by the second device. The first device corrects a projected image based on the first pre-distortion model. The projected image is an image projected by the first device.

In this embodiment of this application, the first device obtains the first pre-distortion model based on the first position information that includes the feature information of the user and that is sent by the second device, so that the first device can correct in real time the projected virtual image based on the first pre-distortion model obtained from the feature information of the user, thereby improving user experience.

Optionally, in a possible implementation, after receiving the first position information, the first device obtains second position information based on the first position information. The second position information is position information that is of multiple pieces of preset position information and whose distance in the preset coordinate system from the first position information is less than a preset threshold, and the preset position information is preset by the first device. After obtaining the second position information, the first device obtains a first pre-distortion model corresponding to the second position information.

In this embodiment of this application, the first device obtains the corresponding first pre-distortion model based on the preset position information, so that a resource consumed during online calculation of the first pre-distortion model is saved, and execution efficiency of the human-computer interaction system in a use stage is improved.

Optionally, in a possible implementation, before the first device receives the first position information sent by the second device, the first device receives at least two pieces of first image information sent by a third device. The at least two pieces of first image information represent information about images that are projected by the first device and that are collected by the third device at different positions in the preset coordinate system.

The first device obtains standard image information. The standard image information represents a projected image that is not distorted. The first device separately compares the at least two pieces of first image information with the standard image information to respectively obtain at least two preset distortion amounts. The preset distortion amount represents a distortion amount of the first image information relative to the standard image information.

The at least two preset distortion amounts obtained by the first device are separately calculated to obtain at least two first pre-distortion models, and the at least two first pre-distortion models are in a one-to-one correspondence with the first image information.

In this embodiment of this application, calculation is performed on information about at least two projected images collected by the third device at different positions and a standard image, to obtain corresponding preset distortion amounts, and then the at least two first pre-distortion models are obtained by using the corresponding preset distortion amounts. During later use, projected images viewed by the user at different positions may be corrected, so that user experience is improved.

Optionally, in a possible implementation, the first device receives gaze information sent by the second device. The gaze information represents information about a user gazing at a reference point, and the reference point is calibrated in the image projected by the first device. The first device determines a first field of view range based on the gaze information. The first field of view range represents a field of view range that can be observed by a user.

The first device determines a first distortion amount based on the gaze information and the first position information. The first distortion amount represents a distortion amount of a human eye calibration image relative to the standard image, the human eye calibration image represents an image that is of the projected image of the first device and that is presented in a human eye of the user, and the standard image is a projected image that is not distorted.

The first device obtains the first pre-distortion model based on a determined first field of view range and the first distortion amount.

In this embodiment of this application, the gaze information of the user is collected in real time, and the projected image is calibrated in real time based on the gaze information, so that the user can view a complete projected image at different positions, thereby improving user experience.

Optionally, in a possible implementation, the feature information includes human eye information of the user.

In this embodiment of this application, when the feature information includes the human eye information, implementability of the technical solution is improved.

Optionally, in a possible implementation, in a specific process in which the first device corrects the projected image based on the first pre-distortion model, the first device performs image processing based on the first pre-distortion model by using one or more of a central processing unit (CPU), a graphics processing unit (GPU), and a field programmable gate array (FPGA), to correct the projected image.

In this embodiment of this application, the first device performs image processing by using one or more of the CPU, the GPU, and the FPGA, to correct the projected image, so that implementability of the solution is improved.

Optionally, in a possible implementation, in a specific process in which the first device corrects the projected image based on the first pre-distortion model, the first device performs light modulation based on the first pre-distortion model by using one or more of a liquid crystal on silicon (LCOS), a digital light processing technology (DLP), and a liquid crystal display (LCD), to correct the projected image.

In this embodiment of this application, the first device performs the light modulation by using one or more of the LCOS, the DLP, and the LCD, to correct the projected image, so that implementability of the solution is improved.

A second aspect of embodiments of this application provides a data processing method.

In a process in which a human-computer interaction system is put into use, a second device obtains first position information. The first position information includes position information of a first feature in a preset coordinate system, the first feature represents feature information of a user obtained by the second device, the first position information is used by the first device to correct a projected image, and the projected image is an image projected by the first device. The second device sends the first position information to the first device.

In this embodiment of this application, the second device sends the first position information including the feature information of the user to the first device, so that the first device can correct in real time the image projected by the first device based on the first position information, thereby improving user experience.

Optionally, in a possible implementation, the second device collects second image information. The second image information includes feature information of the user, and the second device performs calculation based on the second image information, to obtain the first position information.

In this embodiment of this application, the second device collects image information including the feature information of the user and performs calculation, to obtain the first position information, so that implementability of the solution is improved.

Optionally, in a possible implementation, in a process in which the second device performs calculation based on the first image information, the second device performs calculation by using a feature recognition algorithm to obtain feature position information of the feature information in the second image information. The second device performs calculation by using the feature position information to obtain the first position information.

In this embodiment of this application, the second device performs calculation based on the feature recognition algorithm, to obtain the feature position information, and then obtains the first position information based on the feature position information, so that implementability of the solution is improved.

Optionally, in a possible implementation, before the second device performs the calculation to obtain the first position information by using the feature position information, the second device further collects depth information. The depth information represents a straight-line distance from the feature information to the second device. In an implementation in which the second device performs the calculation to obtain the first position information by using the feature position information, the second device performs calculation by using the feature position information and the depth information to obtain the first position information.

In this embodiment of this application, the second device performs calculation to obtain the first position information by using collected depth information and the feature position information, so that accuracy of calculating the first position information is improved.

Optionally, in a possible implementation, the feature information includes human eye information of the user.

In this embodiment of this application, when the feature information includes the human eye information, implementability of the technical solution is improved.

Optionally, in a possible implementation, after the second device obtains the first position information, the second device further obtains gaze information of the user. The gaze information represents information about a user gazing at a reference point, and the reference point is calibrated in the image projected by the first device. The gaze information is used to determine a first distortion amount, the first distortion amount is used to determine a first pre-distortion model, and the first pre-distortion model is used to correct the projected image projected by the first device.

After obtaining the first position information and the gaze information, the second device sends the first position information and the gaze information to the first device.

In this embodiment of this application, the gaze information of the user is collected in real time, and the projected image is calibrated in real time based on the gaze information, so that the user can view a complete projected image at different positions, thereby improving user experience.

A third aspect of embodiments of this application provides a display device.

The display device includes:

a receiving unit, configured to receive first position information sent by a second device, where the first position information includes position information of a first feature in a preset coordinate system, and the first feature represents feature information of a user;
a processing unit, configured to obtain a first pre-distortion model based on the first position information; and
a correction unit, configured to correct a projected image based on the first pre-distortion model, where the projected image is an image projected by the first device.

Optionally, in a possible implementation, the display device further includes:
an obtaining unit, configured to obtain second position information based on the first position information, where the second position information is position information that is of multiple pieces of preset position information and whose distance in the preset coordinate system from the first position information is less than a preset threshold, and the preset position information is preset by the first device.

The obtaining unit is further configured to obtain a first pre-distortion model corresponding to the second position information.

Optionally, in a possible implementation, the receiving unit is further configured to receive at least two pieces of first image information sent by a third device. The at least two pieces of first image information represent information about images that are projected by the first device and that are collected by the third device at different positions in the preset coordinate system.

The obtaining unit is further configured to obtain standard image information. The standard image information represents a projected image that is not distorted.

The processing unit is further configured to separately compare the at least two pieces of first image information with the standard image information to obtain at least two preset distortion amounts. The preset distortion amount represents a distortion amount of the first image information relative to the standard image information.

The processing unit is further configured to separately perform calculation based on the at least two preset distortion amounts, to obtain at least two first pre-distortion models, and the at least two first pre-distortion models are in a one-to-one correspondence with the first image information.

Optionally, in a possible implementation, the receiving unit is further configured to receive gaze information sent by the second device. The gaze information represents information about a user gazing at a reference point, and the reference point is calibrated in the image projected by the first device.

The display device further includes:
a determining unit, configured to determine a first field of view range based on the gaze information. The first field of view range represents a field of view range observed by a user.

The determining unit is further configured to determine a first distortion amount based on the gaze information and the first position information. The first distortion amount represents a distortion amount of a human eye calibration image relative to the standard image, the human eye calibration image represents an image that is of the projected image of the first device and that is presented in a human eye of the user, and the standard image is a projected image that is not distorted.

The processing unit is further configured to obtain the first pre-distortion model based on the first field of view range and the first distortion amount.

Optionally, in a possible implementation, the feature information of the user includes human eye information of the user.

Optionally, in a possible implementation, the correction unit is specifically configured to perform image processing based on the first pre-distortion model by using one or more of a central processing unit CPU, a graphics processing unit GPU, and a field programmable gate array FPGA, to correct the projected image.

Optionally, in a possible implementation, the correction unit is specifically configured to perform light modulation based on the first pre-distortion model by using one or more of a liquid crystal on silicon LCOS, a digital light processing technology DLP, and a liquid crystal display LCD, to correct the projected image.

A fourth aspect of this application provides a feature collection device.

The feature collection device includes:

an obtaining unit, configured to obtain first position information, where the first position information includes position information of a first feature in a preset coordinate system, the first feature represents feature information of a user, the first position information is used by a first device to correct a projected image, and the projected image is an image projected by the first device; and
a sending unit, configured to send the first position information to the first device.

Optionally, in a possible implementation, the feature collection device further includes:

a collecting unit, configured to collect second image information, where the second image information includes feature information of the user; and
a processing unit, configured to perform calculation based on the second image information, to obtain the first position information.

Optionally, in a possible implementation, the processing unit is specifically configured to perform calculation by using a feature recognition algorithm to obtain feature position information of the feature information in the second image information.

The processing unit is specifically configured to perform calculation by using the feature position information to obtain the first position information.

Optionally, in a possible implementation, the collecting unit is further configured to collect depth information. The depth information represents a straight-line distance from the feature information to the second device.

That the processing unit is further configured to perform calculation by using the feature position information to obtain the first position information includes:

The processing unit is further configured to perform calculation by using the feature position information and the depth information to obtain the first position information.

Optionally, in a possible implementation, the feature information includes human eye information of the user.

Optionally, in a possible implementation, the obtaining unit is further configured to obtain gaze information of the user. The gaze information represents information about a user gazing at a reference point, and the reference point is calibrated in the image projected by the first device. The gaze information is used to determine a first distortion amount, the first distortion amount is used to determine a first pre-distortion model, and the first pre-distortion model is used to correct the projected image.

The sending unit is further configured to send the first position information and the gaze information to the first device.

A fifth aspect of embodiments of this application provides a human-computer interaction system.

The human-computer interaction system includes:

a display device, configured to perform the method according to the first aspect of embodiments of this application; and
a feature collection device, configured to perform the method according to the second aspect of embodiments of this application.

A sixth aspect of embodiments of this application provides a display device.

The display device includes:
a processor, a memory, and an input/output device.

The processor connects to the memory and the input/output device.

The processor performs the method according to an implementation of the first aspect of this application.

A seventh aspect of embodiments of this application provides a feature collection device.

The feature collection device includes:
a processor, a memory, and an input/output device.

The processor connects to the memory and the input/output device.

The processor performs the method according to an implementation of the first aspect of this application.

An eighth aspect of embodiments of this application provides a computer storage medium. The computer storage medium stores instructions, and when the instructions are executed on a computer, the computer is enabled to perform the method or methods according to implementations of the first aspect and/or the second aspect of this application.

A ninth aspect of embodiments of this application provides a computer program product. When the computer program product is executed on a computer, the computer is enabled to perform the method or methods according to implementations of the first aspect and/or the second aspect of this application.

According to the foregoing technical solutions, it can be learned that embodiments of this application have the following advantages:

In embodiments of this application, a first device obtains a first pre-distortion model based on position information of feature information of a user in a preset coordinate system, so that the first device can adjust a pre-distortion model in real time, and then correct an image projected by the first device by using the first pre-distortion model, thereby improving quality of a projected image viewed by the user.

## BRIEF DESCRIPTION OF DRAWINGS

FIG. 1 is a schematic diagram of a human-computer interaction system according to this application;
FIG. 2 is another schematic diagram of a human-computer interaction system according to this application;
FIG. 3 is a schematic flowchart of a data processing method according to this application;
FIG. 4 is another schematic flowchart of a data processing method according to this application;
FIG. 5 is a schematic diagram of a scenario of a data processing method according to this application;
FIG. 6 is a schematic diagram of another scenario of a data processing method according to this application;
FIG. 7 is a schematic diagram of another scenario of a data processing method according to this application;
FIG. 8 is a schematic diagram of a structure of a display device according to this application;
FIG. 9 is a schematic diagram of another structure of a display device according to this application;
FIG. 10 is a schematic diagram of a structure of a feature collection device according to this application;
FIG. 11 is a schematic diagram of another structure of a feature collection device according to this application;
FIG. 12 is a schematic diagram of another structure of a display device according to this application; and
FIG. 13 is a schematic diagram of another structure of a feature collection device according to this application.

## DESCRIPTION OF EMBODIMENTS

Embodiments of this application provide a data processing method and a device thereof that are configured to: in a driving system, obtain a first pre-distortion model based on position information of feature information of a user in a preset coordinate system, so that a first device can adjust in real time a pre-distortion model based on the feature information of the user, and then correct an image projected by the first device by using the first pre-distortion model, thereby improving quality of a projected image viewed by the user and improving user experience.

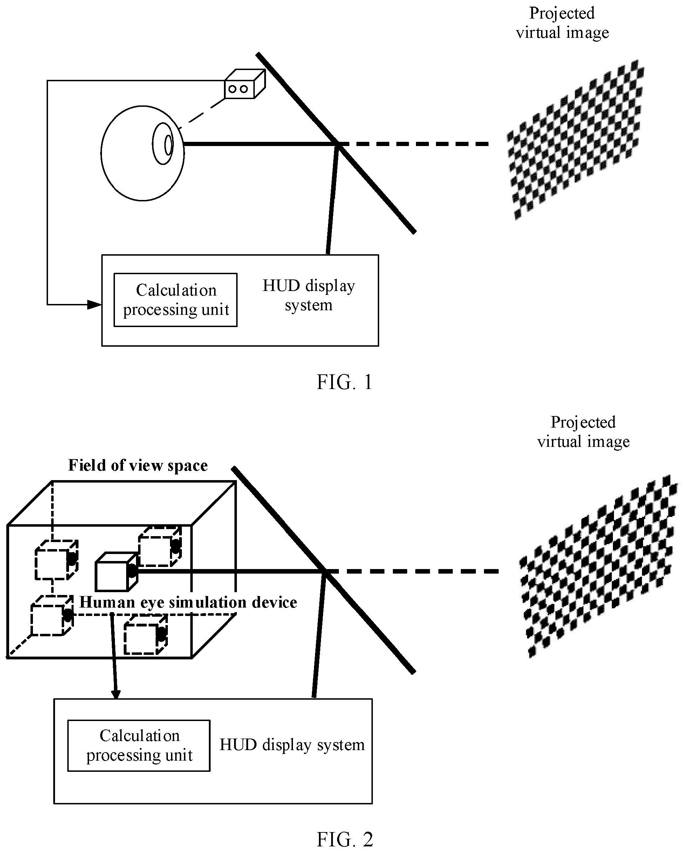

FIG. 1 is a schematic diagram of a human-computer interaction system according to this application.

An embodiment of this application provides a human-computer interaction system. The human-computer interaction system includes a display device, a feature collection device, and a front windshield of a vehicle. The feature collection device and the display device may be connected in a wired or wireless manner. This is not specifically limited herein. If the feature collection device and the display device are connected in a wired manner, the wired connection may be implemented by using a data cable, for example, by using a data cable of a COM interface, a data cable of a USB interface, a data cable of a Type-C interface, or a data cable of a Micro-USB interface. It may be understood that the wired connection may be alternatively implemented in another manner, for example, by using an optical fiber. This is not specifically limited herein. If the feature collection device and the display device are connected in a wireless manner, the wireless connection may be implemented in a manner of Wi-Fi wireless connection, Bluetooth connection, infrared connection, or another wireless connection manner. It may be understood that the wireless connection may be alternatively implemented in another manner, for example, by using a third generation (3G) access technology, a fourth generation (4G) access technology, or a fifth generation (5G) access technology. This is not specifically limited herein.

Specifically, the display device may be a head up display (HUD) system, an augmented reality-head up display (AR-HUD) system, or a display device with a projection imaging function. This is not specifically limited herein.

Specifically, the feature collection device may be a camera, an independent camera lens, or a video camera with a processing function, for example, a human eye tracking device. This is not specifically limited herein.

Optionally, the display device further includes a calculation processing unit. The calculation processing unit is configured to process information sent by another device, such as image information. The calculation processing unit may be integrated in the display device, or may be an independent processing device outside the display device. This is not specifically limited herein.

In the human-computer interaction system, the display device is configured to project, on the front windshield of the vehicle, an image that needs to be displayed. Specifically, the display device may further include an optical system, and the optical system is configured to project, on the front windshield of the vehicle, the image that needs to be displayed. The feature collection device is configured to obtain feature information of the user, and transmit the feature information to the calculation processing unit. The calculation processing unit performs related calculation, and feeds back a calculation result to the display device. Specifically, the feature information may be human eye information. The display device adjusts a projection system to adapt to viewing of the user, so that the user can view a complete projected virtual image at different positions.

In this embodiment of this application, more application scenarios may be further included according to different implementations. FIG. 2 is another schematic diagram of a human-computer interaction system according to this application.

An embodiment of this application further provides a human-computer interaction system. The human-computer interaction system includes a display device, a photographing device, and a front windshield of a vehicle. The photographing device and the display device may be connected in a wired or wireless manner. This is not specifically limited herein. A connection manner of the photographing device and the display device is similar to a connection manner of a feature collection device and a display device in a human-computer interaction system shown in FIG. 1. Details are not described herein again.

Specifically, the display device may be a head up display (HUD) system, an augmented reality-head up display (AR-HUD) system, or a display device with a projection imaging function. This is not specifically limited herein.

Specifically, the photographing device may be a camera, an independent camera lens, or a video camera with a processing function, for example, a human eye simulation device. This is not specifically limited herein.

Optionally, the display device further includes a calculation processing unit. The calculation processing unit is configured to process information sent by another device, such as image information. The calculation processing unit may be integrated in the display device, or may be an independent processing device outside the display device. This is not specifically limited herein.

The photographing device is configured to photograph, in specific field of view space, a projected image by simulating a visual angle of a human eye. The specific field of view space is space in which the projected virtual image can be partially or completely observed in the vehicle.

A scenario shown in FIG. 2 is a scenario in which the human-computer interaction system is in a preparation stage before being put into use according to a possible implementation of the human-computer interaction system. In the scenario, the projected virtual image is photographed by the photographing device at different angles in the specific field of view space, and then a photographed image is transmitted to the calculation processing unit. The calculation processing unit performs related calculation, and feeds back a calculation result to the display device. The display device sets different pre-distortion models based on information about different photographing devices at different positions. In a stage in which the human-computer interaction system is put into use, corresponding pre-distortion models are obtained based on situations of the user at different viewing positions, to adjust the projected virtual image, so that the user can view a complete projected virtual image at different positions.

For ease of understanding embodiments of this application, the following provides a specific explanation of terms used in embodiments of this application.

Eye box range: In an AR-HUD display technology, when an eye of a driver is within the eye box range, a complete projected virtual image projected by an AR-HUD can be viewed; or when an eye of a driver is out of the designed eye box range, the driver can view only a part of the projected virtual image, or cannot view the projected virtual image at all.

The following describes the data processing method in embodiments of this application with reference to the human-computer interaction systems shown in FIG. 1 and FIG. 2.

In embodiments of this application, after a human eye tracking apparatus obtains human eye feature information and sends the human eye feature information to an AR-HUD display system, the AR-HUD display system may correct the projected virtual image by using a preset pre-distortion model; or the AR-HUD display system may obtain human eye gaze information by using the human eye tracking apparatus, obtain a pre-distortion model by using the human eye gaze information and the human eye feature information, and correct the projected virtual image by using the pre-distortion model. The following separately describes two different implementations.

Implementation 1: Correct a projected virtual image by using a preset pre-distortion model.

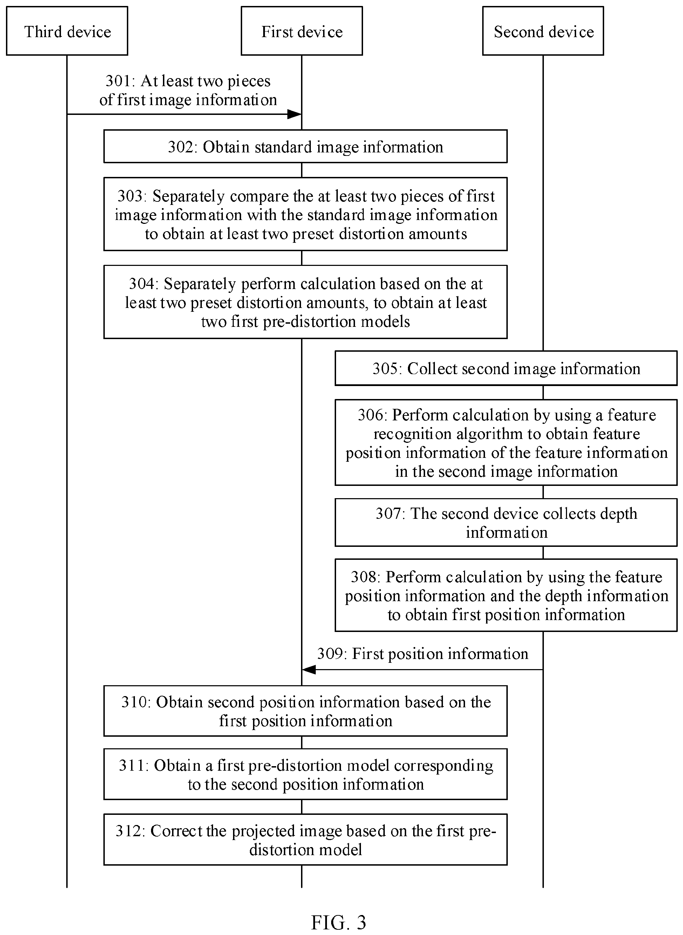

FIG. 3 is a schematic flowchart of a data processing method according to an embodiment of this application.

In this embodiment, an example in which an AR-HUD display system represents a first device, a human eye tracking apparatus represents a second device, and a human eye simulation device represents a third device is used for description.

Step 301: The human eye simulation device sends at least two pieces of first image information to the AR-HUD display system.

Before a human-computer interaction system is put into use, the human-computer interaction system is preset or pre-trained. In a presetting or pre-training stage, the human eye simulation device collects, at different positions in a preset coordinate system, information about an image projected by the AR-HUD, that is, collects the first image information. After collecting at least two pieces of first image information, the human eye simulation device sends the at least two pieces of first image information to the AR-HUD display system.

Specifically, the AR-HUD display system determines an available field of view range for the AR-HUD display system, divides the available field of view range into several small areas, and records position information of central points of the several small areas in the preset coordinate system. The position information of the central points of the several small areas in the preset coordinate system represents preset position information, and the preset position information is preset by the AR-HUD display system.

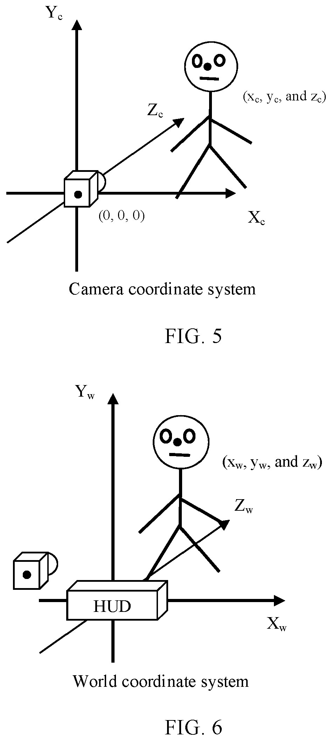

In a possible implementation, as shown in FIG. 5, when the preset coordinate system is a camera coordinate system in which the human eye tracking apparatus is used as an origin, the AR-HUD display system records position coordinates of the central points of the several small areas in the camera coordinate system.

In a possible implementation, as shown in FIG. 6, when the preset coordinate system is a world coordinate system in which the AR-HUD display system is used as an origin, the AR-HUD display system records position coordinates of the central points of the several small areas in the world coordinate system.

After the AR-HUD system records the position information of the central points of the several small areas in the preset coordinate system, the human eye simulation device is installed or placed at a space point corresponding to each piece of position information, to collect the projected virtual image. It should be noted that there may be a plurality of collecting manners, for example, a photographing manner or a shooting manner. This is not specifically limited herein. For example, the human eye simulation device is placed at a space point corresponding to (12, 31, 22) in the camera coordinate system, to photograph a projected virtual image projected by the AR-HUD display system.

In a possible implementation, before the projected virtual image is collected by using the human eye simulation device, the projected virtual image may be further calibrated by using the AR-HUD display system, for example, calibrated by using a checkerboard format or calibrated by using a lattice diagram. This is not specifically limited herein.

By calibrating the projected virtual image, calculation by using a calibrated point may be performed when a corresponding distortion amount of an image is calculated in a later stage. Compared with calculation performed on an uncalibrated image, the calculation by using the calibrated point can improve accuracy of calculating the distortion amount.

Step 302: The AR-HUD display system obtains standard image information.

After the AR-HUD display system receives the at least two pieces of first image information sent by the human eye simulation device, the AR-HUD display system locally obtains the standard image information. The standard image information represents a projected image that is not distorted.

Optionally, in a possible implementation, an obtained standard image is a calibrated standard image, and a specific calibration manner may be calibration by using the checkerboard format or calibration by using the lattice diagram. This is not specifically limited herein. A calibration manner of the standard image may be the same as a calibration manner of the received at least two pieces of first image information.

Step 303: The AR-HUD display system separately compares the at least two pieces of first image information with the standard image to obtain at least two preset distortion amounts.

After obtaining the standard image, the AR-HUD display system separately compares the received at least two pieces of first image information with the standard image to obtain the at least two preset distortion amounts. The preset distortion amount represents a distortion amount of the first image information relative to the standard image information.

Specifically, in a possible implementation, after the first image information and the standard image are separately calibrated, the AR-HUD display system obtains the preset distortion amount by calculating a transformation formula between a calibration point of the standard image and a calibration point in the first image information. For example, a 100*100 dot matrix is calibrated by the standard image, and an 80*80 dot matrix is included in the first image information. In this case, a transformation formula for transforming the 80*80 dot matrix to the 100*100 dot matrix is calculated to obtain the preset distortion amount.

In an actual application process, because a distortion status of the first image information relative to the standard image information is relatively complex, a corresponding calculation manner may be designed. A specific calculation manner is not limited herein.

Step 304: The AR-HUD display system separately performs calculation based on the at least two preset distortion amounts, to obtain at least two first pre-distortion models.

After the AR-HUD display system obtains the at least two preset distortion amounts, the AR-HUD display system separately performs calculation based on the at least two preset distortion amounts, to obtain the at least two first pre-distortion models. The at least two pre-distortion models are in a one-to-one correspondence with the first image information.

Specifically, in a possible implementation, the AR-HUD display system may perform calculation by using the standard image and the preset distortion amount, to obtain a transformation mathematical model corresponding to the standard image; in other words, the transformation mathematical model is the first pre-distortion model. In an actual application process, the AR-HUD display system may adjust the standard image based on the transformation mathematical model and project an adjusted image, so that when a user views the projected image by using the position information that is in the first image information and that corresponds to the transformation mathematical model, the user can view a complete standard image.

Specifically, in a possible implementation, the AR-HUD display system may further perform calculation based on the preset distortion amount and a projection parameter of the AR-HUD display system, to obtain a modified projection parameter; in other words, the modified projection parameter is the first pre-distortion model. In an actual application process, the AR-HUD display system can project the standard image based on the modified projection parameter, and because the projection parameter is modified, the standard image changes as the projection parameter changes. Because the projection parameter is obtained based on the preset distortion amount, when a user views the projected image by using the position information that is in the first image information and that corresponds to the projection parameter, the user can view the complete standard image.

Specifically, after a plurality of first pre-distortion models are obtained, a correspondence between each of the plurality of first pre-distortion models and corresponding position information in the first image information may be established, and the correspondence is stored locally in the AR-HUD display system.

Step 305: The human eye tracking apparatus collects second image information.

In the stage in which the human-computer interaction system is put into use, when a user enters the vehicle, the human eye tracking apparatus collects the second image information. The second image information includes feature information of the user.

Specifically, in a possible implementation, the feature information of the user includes human eye information. When the user enters the vehicle, the human eye tracking apparatus performs photographing or video recording on the user, to collect the second image information of the user. The second image information includes the human eye information of the user. When the human eye tracking apparatus performs collecting in a video recording manner, after collecting, the image information of the user is determined through frame image extraction of a video recorded.

It may be understood that the feature information may further include more information, for example, face information, nose information, and mouth information. This is not specifically limited herein.

Step 306: The human eye tracking apparatus performs calculation by using a feature recognition algorithm to obtain feature position information of the feature information in the second image information.

After the human eye tracking apparatus collects the second image information, the human eye simulation device performs calculation by using the feature recognition algorithm, to obtain the feature position information of the feature information in the second image information. The feature position information represents position information of the feature information in the second image information.

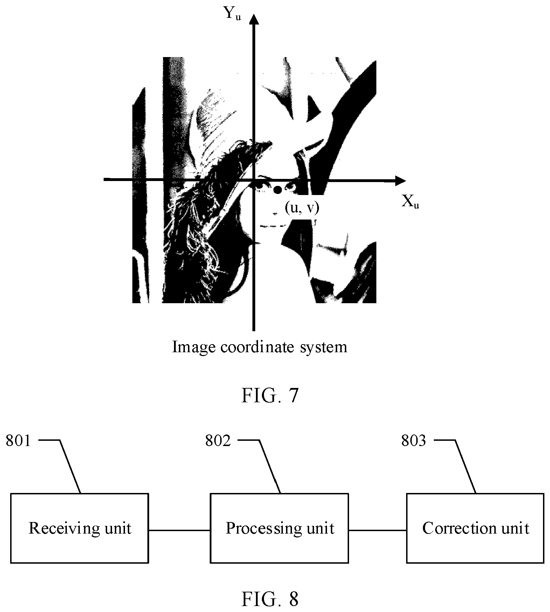

Specifically, in a possible implementation, the human eye tracking apparatus recognizes position information of the human eye information of the user in the second image information by using the human eye recognition algorithm, and further obtains a position of a human eye in an image coordinate system. As shown in FIG. 7, the image coordinate system represents a two-dimensional coordinate system in which an image center is used as an origin of coordinates. For example, the Hough circle detection method is used to recognize the position information of the human eye information of the user in the second image information. Alternatively, a convolutional neural network is used to recognize the position information of the human eye information of the user in the second image information. This is not specifically limited herein.

Step 307: The human eye tracking apparatus collects depth information.

The human eye tracking apparatus is further configured to collect the depth information. The depth information represents a straight-line distance from the feature information of the user to the human eye tracking apparatus.

Specifically, in a possible implementation, the human eye tracking apparatus obtains a straight-line distance from the human eye information of the user to the human eye tracking apparatus by using a distance measurement function. For example, the human eye tracking apparatus obtains, in an infrared distance measurement manner, the straight-line distance from the human eye information of the user to the human eye tracking apparatus. It may be understood that the depth information may be alternatively obtained in another manner, for example, in an ultrasonic distance measurement manner. This is not specifically limited herein.

Step 308: The human eye tracking apparatus performs calculation based on the feature position information and the depth information to obtain first position information.

After the human eye tracking apparatus collects the depth information, the human eye tracking apparatus performs calculation based on the feature position information and the depth information to obtain the first position information. The first position information represents position information of the feature information of the user in the preset coordinate system.

Specifically, in a possible implementation, when the preset coordinate system is the camera coordinate system, the human eye tracking apparatus performs calculation based on the feature position information, the depth information, and an intrinsic parameter of the human eye tracking apparatus to obtain the first position information. For example, the calculation may be performed by using the following formula:

$$z_c = ds$$

$$x_c = Z(u - C_u)/f_u$$

$$y_c = Z(v - C_v)/f_v$$

$z_c$ represents a value corresponding to a Z axis in the position information of the feature information of the user in the camera coordinate system; $x_c$ represents a value corresponding to an X axis in the position information of the feature information of the user in the camera coordinate system; $y_c$ represents a value corresponding to a Y axis in the position information of the feature information of the user in the camera coordinate system; d represents depth information; s represents a scale factor in the intrinsic parameter of the human eye tracking apparatus; $f_u$ represents a focal length in a horizontal direction in the intrinsic parameter of the human eye tracking apparatus; $f_v$ represents a focal length in a vertical direction in the intrinsic parameter of the human eye tracking apparatus; u represents a value corresponding to an X axis in the feature position information in the image coordinate system; v represents a value corresponding to a Y axis in the feature position information in the image coordinate system; and $C_u$ and $C_v$ represent values that are in the X axis and the Y axis and that are corresponding to coordinates of the origin in the image coordinate system.

It should be noted that when the preset coordinate system is the camera coordinate system, the first position information is equal to the position information of the feature information of the user in the camera coordinate system.

It may be understood that, in an actual application process, the position information of the feature information of the user in the camera coordinate system may be alternatively obtained by using another formula. This is not specifically limited herein.

When the preset coordinate system is the world coordinate system in which the AR-HUD display system is used as the origin, the first position information represents position information of the feature information of the user in the world coordinate system, and the human eye tracking apparatus performs calculation based on the position information of the feature information of the user in the camera coordinate system, to obtain the first position information.

Specifically, in a possible implementation, the human eye tracking apparatus may obtain the first position information through calculation in the following manner:

$$R_x = \begin{pmatrix} 1 & 0 & 0 \\ 0 & \cos\omega & \sin\omega \\ 0 & -\sin\omega & \cos\omega \end{pmatrix}, R_Y = \begin{pmatrix} \cos\delta & 0 & -\sin\delta \\ 0 & 1 & 0 \\ \sin\delta & 0 & \cos\delta \end{pmatrix}, R_Z = \begin{pmatrix} \cos\theta & \sin\theta & 0 \\ -\sin\theta & \cos\theta & 0 \\ 0 & 0 & 1 \end{pmatrix}$$

$$R = R_Z * R_Y * R_X \quad, \quad T = (t_x, t_y, t_z)^T$$

$$\begin{pmatrix} x_w \\ y_w \\ z_w \end{pmatrix} = R * \begin{pmatrix} x_c \\ y_c \\ z_c \end{pmatrix} + T$$

$\omega$, $\delta$, and $\theta$ are rotation parameters ($\omega$, $\delta$, and $\theta$); $t_x$, $t_y$, and $t_z$ are panning parameters ($t_x$, $t_y$, $t_z$) of three axes; $x_w$ is a value corresponding to an X axis in the position information of the feature information of the user in the world coordinate system; $y_w$ is a value corresponding to a Y axis in the position information of the feature information of the user in the world coordinate system; $z_w$ is a value corresponding to a Z axis in the position information of the feature information of the user in the world coordinate system; $z_c$ represents a value corresponding to the Z axis in the position information of the feature information of the user in the camera coordinate system; $x_c$ represents a value corresponding to the X axis in the position information of the feature information of the user in the camera coordinate system; and $y_c$ represents a value corresponding to the Y axis in the position information of the feature information of the user in the camera coordinate system.

It may be understood that, the position information of the feature information of the user in the world coordinate system may be alternatively calculated by using another formula. This is not specifically limited herein.

Step 309: The human eye tracking apparatus sends the first position information to the AR-HUD display system.

After the human eye tracking apparatus obtains the first position information, the human eye tracking apparatus sends the first position information to the AR-HUD display system.

Step 310: The AR-HUD display system obtains second position information based on the first position information.

After receiving the first position information sent by the human eye tracking apparatus, the AR-HUD display system obtains the second position information based on the first position information. The second position information represents position information that is of multiple pieces of preset position information and whose distance in the preset coordinate system from the first position information is less than a preset threshold.

Specifically, in a possible implementation, the AR-HUD display system separately performs calculation based on the first position information and each of the multiple pieces of preset position information, to obtain preset position information whose distance in the preset coordinate system from the first position information is smallest. For example, the calculation may be performed by using the following formula:

$$j = \arg \ \min_{i} \sqrt[2]{\left[ \left( x_w - x_i \right)^2 + \left( y_w - y_i \right)^2 + \left( z_w - z_i \right)^2 \right]}$$

j represents an index number corresponding to a value of a smallest distance between the preset position information and the first position information; $x_i$ represents a value corresponding to an X axis in the preset position information; $y_i$ represents a value corresponding to a Y axis in the preset position information; $z_i$ represents a value corresponding to a Z axis in the preset position information; $x_w$ is a value corresponding to the X axis in the position information of the feature information of the user in the world coordinate system; $y_w$ is a value corresponding to the Y axis in the position information of the feature information of the user in the world coordinate system; and $z_w$ is a value corresponding to the Z axis in the position information of the feature information of the user in the world coordinate system.

It may be understood that the distance between the preset position information and the first position information may be alternatively obtained through calculation by using another formula. For example, when the first position information is the position information of the feature information of the user in the camera coordinate system, corresponding values ($x_c$, $y_c$, and $z_c$) of the position information in the camera coordinate system are used instead of ($x_w$, $y_w$, $z_w$) in the foregoing formula. A specific calculation formula is not limited herein.

By using the foregoing method, a distance between each piece of preset position information and the first position information is obtained, and preset position information whose distance from the first position information is less than a preset range is selected as the second position information. The preset position information whose distance from the first position information is smallest may be selected as the second position information.

Step 311: The AR-HUD display system obtains a first pre-distortion model corresponding to the second position information.

After obtaining the second position information, the AR-HUD display system locally searches for the first pre-distortion model corresponding to the second position information.

Step 312: The AR-HUD display system corrects the projected image based on the first pre-distortion model.

After the AR-HUD display system obtains the first pre-distortion model, the AR-HUD display system corrects, based on the first pre-distortion model, the image projected by the first device.

Specifically, in a possible implementation, when the first pre-distortion model represents the transformation mathematical model of the standard image, the AR-HUD display system adjusts the standard image based on the transformation mathematical model and projects an adjusted image, so that when a human eye of a user views the projected image by using the preset position information corresponding to the transformation mathematical model, the human eye of the user can view the complete standard image.

Specifically, in a possible implementation, the AR-HUD display system may process the standard image based on the transformation mathematical model by using one or more of the CPU, the GPU, and the FPGA to obtain an adjusted image, so that when a human eye of a user views the adjusted projected image by using the preset position information corresponding to the transformation mathematical model, the human eye of the user can view the complete standard image. It may be understood that the standard image may be alternatively processed in another manner to achieve an objective of adjusting the image. This is not specifically limited herein.

Specifically, in a possible implementation, when the first pre-distortion model represents the modified projection parameter, the AR-HUD display system projects the standard image based on the modified projection parameter, and because the projection parameter is modified, the standard image changes as the projection parameter changes. Because the projection parameter is obtained based on the preset distortion amount, when a human eye of a user views the projected image by using preset position information corresponding to the projection parameter, the human eye of the user can view the complete standard image.

Specifically, in a possible implementation, the AR-HUD display system may perform light modulation on one or more of a liquid crystal on silicon LCOS, a digital light processing technology DLP, and a liquid crystal display LCD based on the modified projection parameter. In this way, when a human eye of a user views a light-modulated projected image by using the preset position information corresponding to the projection parameter, the human eye of the user can view the complete standard image. It may be understood that the light modulation may be alternatively performed in another manner to achieve an objective of adjusting the projected image. This is not specifically limited herein.

In this embodiment, step 301 to step 304 are steps in which the human-computer interaction system is in a preparation stage before being put into use. Therefore, in an actual application process, that is, in a stage in which the human-computer interaction system is put into use, only step 305 to step 312 may be performed. This is not specifically limited herein.

In this embodiment, the AR-HUD display system determines the first pre-distortion model by using the feature information of the user that is collected by the human eye tracking apparatus, and then corrects the projected image based on the first pre-distortion model, so that the user can view a complete projected image at different positions, thereby improving visual experience of the user.

Implementation 2: Obtain in real time human eye gaze information by using a human eye tracking apparatus, and then correct a projected virtual image.

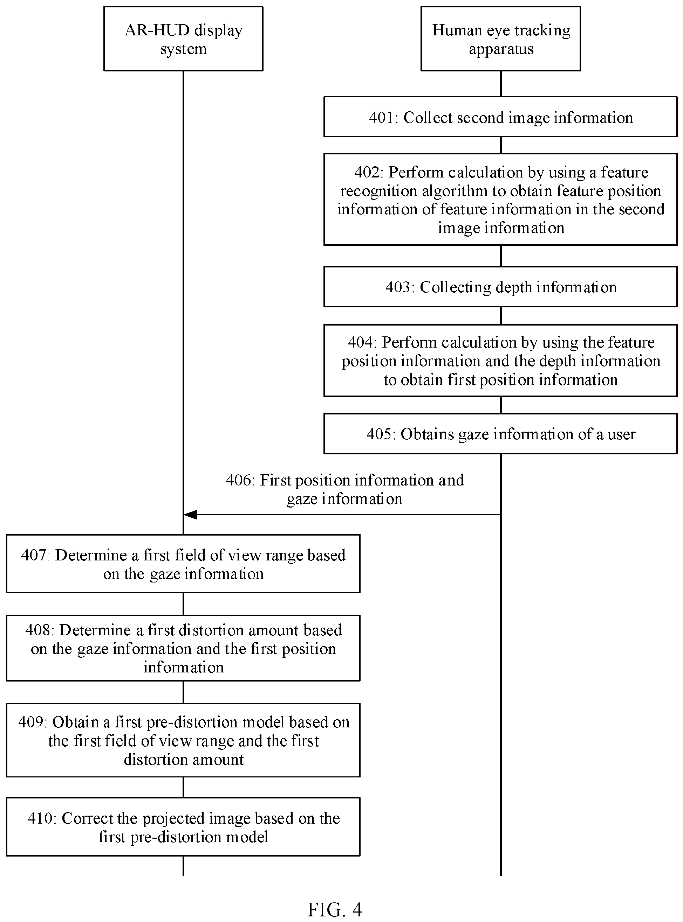

FIG. 4 is another schematic flowchart of a data processing method according to an embodiment of this application.

In this embodiment, an example in which an AR-HUD display system represents a first device, and a human eye tracking apparatus represents a second device is used for description.

Step 401: The human eye tracking apparatus collects second image information.

Step 402: The human eye tracking apparatus performs calculation by using a feature recognition algorithm to obtain feature position information of feature information in the second image information.

Step 403: The human eye tracking apparatus collects depth information.

Step 404: The human eye tracking apparatus performs calculation based on the feature position information and the depth information to obtain first position information.

Method steps performed in steps 401 to 404 in this embodiment are similar to steps 305 to 308 in the foregoing embodiment shown in FIG. 3. Details are not described herein again.

Step 405: The human eye tracking apparatus obtains gaze information of a user.

The human eye tracking apparatus is further configured to obtain the gaze information of the user. The gaze information represents information about a user gazing at a reference point, and the reference point is calibrated in the image projected by the first device.

Specifically, in a possible implementation, when a user enters a vehicle, the user chooses whether to enable a calibration mode, and the calibration mode is used to calibrate a current projected virtual image. If the user enables the calibration mode, the AR-HUD system projects image information calibrated with the reference point, for example, an image calibrated by a lattice diagram calibration method or an image calibrated by a checkerboard calibration method. The reference point represents a point in a lattice diagram or a point in a checkerboard. This is not specifically limited herein. It may be understood that the calibration mode may be alternatively implemented through automatic enabling. For example, when it is detected that the user currently enters the vehicle, the calibration mode is automatically enabled. A specific occasion or manner of enabling the calibration mode is not limited herein.

After projecting the image information calibrated with the reference point, the AR-HUD display system indicates, by sending indication information to the user, the user to gaze at the point in the image information. The human eye tracking apparatus collects human eye information when a human eye of the user is gazing, to obtain the gaze information. For example, the AR-HUD display system emits a system voice to prompt the user to enter the calibration mode, and projects the calibrated image information onto a front windshield. The system voice further indicates the user to gaze at calibrated reference points in the image information one by one. When a time period during which the human eye of the user gazes at the reference point exceeds a preset time period, for example, the time period during which the human eye gazes at the reference point exceeds three seconds, the AR-HUD display system determines that the user gazes at the reference point, and obtains corresponding human eye information. It may be understood that, that the preset time period herein is three seconds is merely an example. In an actual application process, different values may be set based on different scenarios. This is not specifically limited herein. It should be noted that the indication information may be a system voice, or information that is on the projected image and that is used to indicate the user to view the reference point. This is not specifically limited herein.

Specifically, in a possible implementation, when the user gazes at the reference point according to the indication information, the human eye tracking apparatus emits an infrared ray, to form a bright spot at a pupil of the human eye. Different angles from the human eye tracking apparatus to the pupil of the human eye make the bright spot form at different positions of the pupil. The human eye tracking apparatus then calculates a direction of a line of sight of the human eye by using a position of the bright spot relative to a central point of the pupil. The human eye tracking apparatus then determines coordinates of a reference point actually observed by the human eye in the projected virtual image, based on the position of the human eye in the preset coordinate system and the direction of the line of sight of the human eye.

It may be understood that, in an actual application process, the human eye tracking apparatus may alternatively collect, in another manner, the coordinates of the reference point observed by the human eye. This is not specifically limited herein.

In a process in which the human eye tracking apparatus collects each reference point gazed by the human eye, because some reference points exceed a field of view range that can be observed by the user at a current position, the human eye tracking apparatus is unable to collect coordinates of a reference point observed by the human eye with regard to the reference point. After the user gazes at each observable reference point, coordinate points collected by the human eye tracking apparatus may form a piece of human eye calibration image information, and the human eye calibration image information is calibrated image information that can be observed by the user at a current position, namely, gaze information.

Step 406: The human eye tracking apparatus sends the first position information and the gaze information to the AR-HUD display system.

After the human eye tracking apparatus obtains the first position information and the gaze information, the human eye tracking apparatus sends the first position information and the gaze information to the AR-HUD display system.

Step 407: The AR-HUD display system determines a first field of view range based on the gaze information.

After receiving the gaze information, the AR-HUD display system determines the first field of view range based on the gaze information. The first field of view range represents a field of view range that can be observed by a user at a current position.

Specifically, the AR-HUD display system determines the first field of view range based on the human eye calibration image information in the gaze information.

Step 408: The AR-HUD display system determines a first distortion amount based on the gaze information and the first position information.

After determining the first field of view range, the AR-HUD display system determines the first distortion amount based on the first position information and the gaze information. The first distortion amount represents a distortion amount of a human eye calibration image relative to a standard image, and the standard image is a projected image that is not distorted.

Specifically, in a possible implementation, the AR-HUD display system obtains, based on position information of the human eye information of the user in the first position information in the preset coordinate system, and coordinates of each reference point in the human eye calibration image information in the gaze information, coordinate information of the human eye calibration image relative to the first position information, and then obtains position information of the human eye calibration image in the preset coordinate system through coordinate conversion. Then, the first distortion amount is obtained by calculating the position information of the human eye calibration image in the preset coordinate system and the

13

position information of the standard image in the preset coordinate system.

It may be understood that, in an actual application process, the first distortion amount may be alternatively determined in another manner. For example, the first distortion amount is obtained by using position information of a specific reference point in the human eye calibration image in the preset coordinate system and position information of a reference point corresponding to a standard image calibrated by using the same calibration method in the preset coordinate system. This is not specifically limited herein.

Step 409: The AR-HUD display system obtains a first pre-distortion model based on the first field of view range and the first distortion amount.

After the AR-HUD display system obtains the first distortion amount, the AR-HUD display system obtains the first pre-distortion model based on the first field of view range and the first distortion amount.

Specifically, in a possible implementation, the AR-HUD display system determines, based on a field of view range that can be viewed by the human eye of the user at a current position, a range in which a projected virtual image can be projected, then performs calculation based on the first distortion amount and the standard image, to obtain a transformation mathematical model corresponding to the standard image, and then determines the first pre-distortion model based on the transformation mathematical model corresponding to the standard image and the range in which the projected virtual image can be projected.

Specifically, in a possible implementation, the AR-HUD display system determines, based on the field of view range that can be viewed by the human eye of the user at the current position, the range in which the projected virtual image can be projected, then performs calculation based on the first distortion amount and a projection parameter of the AR-HUD display system, to obtain a modified projection parameter, and then determines the first pre-distortion model based on the modified projection parameter and the range in which the projected virtual image can be projected.

It may be understood that, in an actual application process, the first pre-distortion model may be alternatively determined in another manner. This is not specifically limited herein.

Step 410: The AR-HUD display system corrects the projected image based on the first pre-distortion model.

Step 410 in this embodiment is similar to step 312 in the foregoing embodiment shown in FIG. 3. Details are not described herein again.

In this embodiment, the AR-HUD display system determines the first pre-distortion model by collecting the human eye gaze information, to correct the projected image based on the first pre-distortion model, so that the user can correct the projected image in real time, thereby improving user experience.

The foregoing describes the data processing methods in embodiments of this application. The following describes the devices in embodiments of this application. FIG. 8 is a schematic diagram of a structure of a display device according to an embodiment of this application.

A display device includes:

a receiving unit 801, configured to receive first position information sent by a second device, where the first position information includes position information of a first feature in a preset coordinate system, and the first feature represents feature information of a user;
a processing unit 802, configured to obtain a first pre-distortion model based on the first position information; and
a correction unit 803, configured to correct a projected image based on the first pre-distortion model, where the projected image is an image projected by the first device.

In this embodiment, operations performed by each unit of the display device are similar to those described in the AR-HUD display system in the foregoing embodiments shown in FIG. 2 and FIG. 3. Details are not described herein again.

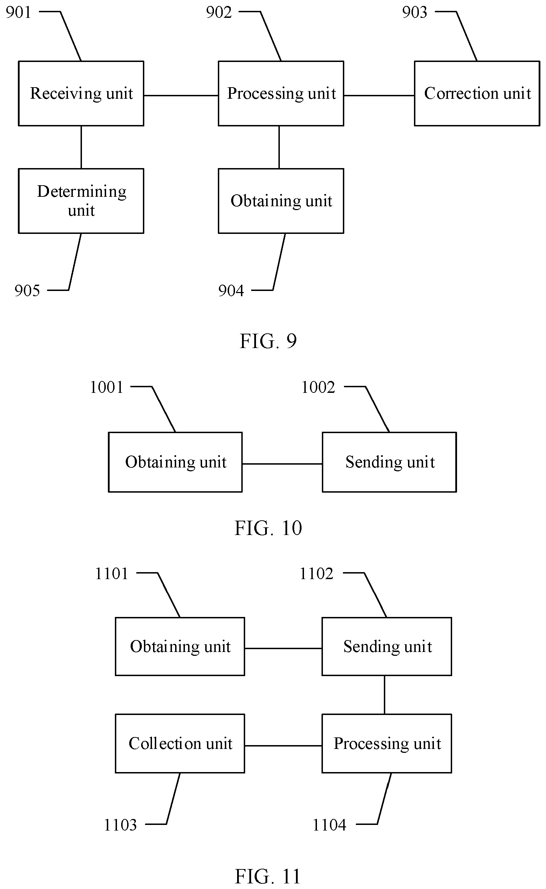

FIG. 9 is a schematic diagram of a structure of a display device according to another embodiment of this application.

A display device includes:

a receiving unit 901, configured to receive first position information sent by a second device, where the first position information includes position information of a first feature in a preset coordinate system, and the first feature represents feature information of a user;
a processing unit 902, configured to obtain a first pre-distortion model based on the first position information; and
a correction unit 903, configured to correct a projected image based on the first pre-distortion model, where the projected image is an image projected by the first device.

Optionally, the display device further includes:
an obtaining unit 904, configured to obtain second position information based on the first position information, where the second position information is position information that is of multiple pieces of preset position information and whose distance in the preset coordinate system from the first position information is less than a preset threshold, and the preset position information is preset by the first device.

The obtaining unit 904 is further configured to obtain a first pre-distortion model corresponding to the second position information.

Optionally, the receiving unit 901 is further configured to receive at least two pieces of first image information sent by a third device. The at least two pieces of first image information represent information about images that are projected by the first device and that are collected by the third device at different positions in the preset coordinate system.

The obtaining unit 904 is further configured to obtain standard image information. The standard image information represents a projected image that is not distorted.

The processing unit 902 is further configured to separately compare the at least two pieces of first image information with the standard image information to obtain at least two preset distortion amounts. The preset distortion amount represents a distortion amount of the first image information relative to the standard image information.

The processing unit 902 is further configured to separately perform calculation based on the at least two preset distortion amounts, to obtain at least two first pre-distortion models, and the at least two first pre-distortion models are in a one-to-one correspondence with the first image information.

Optionally, the receiving unit 901 is further configured to receive gaze information sent by the second device. The gaze information represents information about a user gazing at a reference point, and the reference point is calibrated in the image projected by the first device.

The display device further includes:

a determining unit 905, configured to determine a first field of view range based on the gaze information. The first field of view range represents a field of view range observed by a user.

The determining unit 905 is further configured to determine a first distortion amount based on the gaze information and the first position information. The first distortion amount represents a distortion amount of a human eye calibration image relative to the standard image, the human eye calibration image represents an image that is of the projected image of the first device and that is presented in a human eye of the user, and the standard image is a projected image that is not distorted.

The processing unit 902 is further configured to obtain the first pre-distortion model based on the first field of view range and the first distortion amount.

Optionally, the feature information of the user includes human eye information of the user.

Optionally, the correction unit 903 is specifically configured to perform image processing based on the first pre-distortion model by using one or more of a central processing unit CPU, a graphics processing unit GPU, and a field programmable gate array FPGA, to correct the projected image.

Optionally, the correction unit 903 is specifically configured to perform light modulation based on the first pre-distortion model by using one or more of a liquid crystal on silicon LCOS, a digital light processing technology DLP, and a liquid crystal display LCD, to correct the projected image.

In this embodiment, operations performed by each unit of the display device are similar to those described in the AR-HUD display system in the foregoing embodiments shown in FIG. 2 and FIG. 3. Details are not described herein again.

FIG. 10 is a schematic diagram of a structure of a feature collection device according to an embodiment of this application.

The feature collection device includes:

an obtaining unit 1001, configured to obtain first position information, where the first position information includes position information of a first feature in a preset coordinate system, the first feature represents feature information of a user, the first position information is used by a first device to correct a projected image, and the projected image is an image projected by the first device; and

a sending unit 1002, configured to send the first position information to the first device.

In this embodiment, operations performed by each unit of the feature collection device are similar to those described in the human eye tracking apparatus in the foregoing embodiments shown in FIG. 2 and FIG. 3. Details are not described herein again.

FIG. 11 is a schematic diagram of a structure of a feature collection device according to another embodiment of this application.

An obtaining unit 1101 is configured to obtain first position information, where the first position information includes position information of a first feature in a preset coordinate system, the first feature represents feature information of a user, the first position information is used by a first device to correct a projected image, and the projected image is an image projected by the first device.

A sending unit 1102 is configured to send the first position information to the first device.

Optionally, the feature collection device further includes:

a collecting unit 1103, configured to collect second image information, where the second image information includes feature information of the user; and

a processing unit 1104, configured to perform calculation based on the second image information, to obtain the first position information.

Optionally, the processing unit 1104 is specifically configured to perform calculation by using a feature recognition algorithm to obtain feature position information of the feature information in the second image information.

The processing unit 1104 is specifically configured to perform calculation by using the feature position information to obtain the first position information.

Optionally, the collecting unit 1103 is further configured to collect depth information. The depth information represents a straight-line distance from the feature information to the second device.

That the processing unit 1104 is further configured to perform calculation by using the feature position information to obtain the first position information includes:

The processing unit 1104 is further configured to perform calculation by using the feature position information and the depth information to obtain the first position information.

Optionally, the feature information includes human eye information of the user.

Optionally, the obtaining unit 1101 is further configured to obtain gaze information of the user. The gaze information represents information about a user gazing at a reference point, and the reference point is calibrated in the image projected by the first device. The gaze information is used to determine a first distortion amount, the first distortion amount is used to determine a first pre-distortion model, and the first pre-distortion model is used to correct the projected image.

The sending unit 1102 is further configured to send the first position information and the gaze information to the first device.

In this embodiment, operations performed by each unit of the feature collection device are similar to those described in the human eye tracking apparatus in the foregoing embodiments shown in FIG. 2 and FIG. 3. Details are not described herein again.

It should be noted that, in an actual application process, functional units in embodiments of this application may be integrated into one processing unit, or may exist alone physically, or two or more units may be integrated into one unit. For example, the obtaining unit of the feature collection device may be a camera lens, and the determining unit may be a processor, or both the obtaining unit and the determining unit in the display device may correspond to one processor, and the processor implements described functions of the obtaining unit and the determining unit.

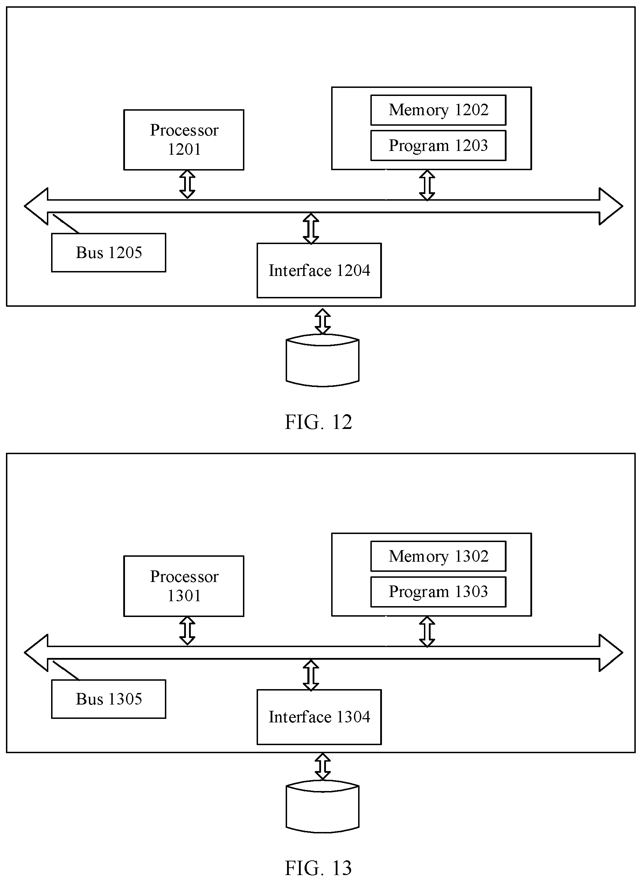

FIG. 12 is a schematic diagram of a structure of a display device according to another embodiment of this application.

A display device includes devices such as a processor 1201, a memory 1202, a bus 1205, and an interface 1204. The processor 1201 connects to the memory 1202 and the interface 1204. The bus 1205 separately connects to the processor 1201, the memory 1202, and the interface 1204. The interface 1204 is configured to receive or send data. The processor 1201 is a single-core or multi-core central processing unit, or is a specific integrated circuit, or is configured as one or more integrated circuits to implement this embodiment of the present application. The memory 1202 may be a random access memory (RAM), or may be a non-volatile memory, for example, at least one hard disk memory. The memory 1202 is configured to store computer executable instructions. Specifically, the computer executable instructions may include a program 1203.

In this embodiment, the processor 1201 may perform operations performed by the AR-HUD display system in the foregoing embodiments shown in FIG. 2 and FIG. 3. Details are not described herein again.

FIG. 13 is a schematic diagram of a structure of a feature collection device according to another embodiment of this application.

A feature collection device includes devices such as a processor 1301, a memory 1302, a bus 1305, and an interface 1304. The processor 1301 connects to the memory 1302 and the interface 1304. The bus 1305 separately connects to the processor 1301, the memory 1302, and the interface 1304. The interface 1304 is configured to receive or send data. The processor 1301 is a single-core or multi-core central processing unit, or is a specific integrated circuit, or is configured as one or more integrated circuits to implement this embodiment of the present application. The memory 1302 may be a random access memory (RAM), or may be a non-volatile memory, for example, at least one hard disk memory. The memory 1302 is configured to store computer executable instructions. Specifically, the computer executable instructions may include a program 1303.

In this embodiment, the processor 1301 may perform operations performed by the human eye tracking apparatus in the foregoing embodiments shown in FIG. 2 and FIG. 3. Details are not described herein again.

It should be understood that, the processor in embodiments of this application may be a central processing unit (CPU), or may be another general purpose processor, a digital signal processor (DSP), an application-specific integrated circuit (ASIC), a field programmable gate array (FPGA), or another programmable logic device, discrete gate or transistor logic device, discrete hardware component, or the like. The foregoing general purpose processor may be a microprocessor or the processor may also be any conventional processor or the like.

It should be further understood that a quantity of the processor in the foregoing embodiments of this application may be one or more, and may be adjusted based on an actual application scenario. This is merely an example for description and is not limited herein. A quantity of a memory in this embodiment of this application may be one or more, and may be adjusted based on an actual application scenario. This is merely an example for description and is not limited herein.

It should be noted that, when the display device or the feature collection device includes a processor (or a processing unit) and a storage unit, the processor in this application may be integrated with the storage unit, or the processor may be connected to the storage unit by using an interface. This may be adjusted based on an actual application scenario, and is not limited.

An embodiment of this application further provides a computer program or a computer program product including a computer program. When the computer program is executed on a computer, the computer is enabled to implement a method procedure related to an AR-HUD display system or a human eye tracking apparatus in any one of the foregoing method embodiments.

An embodiment of this application further provides a computer-readable storage medium. The computer-readable storage medium stores a computer program. When being executed by a computer, the computer program implements a method procedure related to an AR-HUD display system or a human eye tracking apparatus in any one of the foregoing method embodiments.

All or some of the foregoing embodiments in FIG. 2 and FIG. 3 may be implemented by using software, hardware, firmware, or any combination thereof. When software is used to implement embodiments, embodiments may be implemented completely or partially in a form of a computer program product.

The computer program product includes one or more computer instructions. When the computer program instructions are loaded and executed on the computer, the procedure or functions according to embodiments of this application are all or partially generated. The computer may be a general purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (SSD)), or the like.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or may exist alone physically, or two or more units may be integrated into one unit. The integrated unit may be implemented in a form of hardware, or may be implemented in a form of a software functional unit.

The terms used in embodiments of this application are merely for the purpose of describing specific embodiments, and are not intended to limit the present application. The terms "a", "the" and "this" of singular forms used in embodiments of this application are also intended to include plural forms, unless otherwise specified in the context clearly. It should be further understood that, in the description of this application, unless otherwise noted, the character "/" indicates an "or" relationship between the associated objects, for example, A/B may indicate A or B. In this application, "and/or" merely describes an association relationship between associated objects, and indicates that three relationships may exist. For example, A and/or B may represent the following cases: Only A exists, both A and B exist, and only B exists, where A and B may be singular or plural.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application.

**Claims**

1. A data processing method, comprising:

receiving (301), by a first device, at least two pieces of first image information sent by a third device, wherein the first device is an AR-HUD display system and the third device is a human eye simulation device, and wherein the at least two pieces of first image information represents information about an image projected by the first device collected by the third device at different positions in a preset coordinate system;

obtaining (302), locally by the first device, a standard image, wherein the obtained standard image is a calibrated standard image;

separately comparing (303), by the first device, the at least two pieces of first image information with the standard image to obtain at least two preset distortion amounts;

separately performing (304), by the first device, calculation based on the at least two preset distortion amounts, to obtain at least two first pre-distortion models, wherein the at least two first pre-distortion models are in a one-to-one correspondence with the first image information;

receiving (309), by the first device, first position information sent by a second device, wherein the first position information represents position information of feature information of a user in the preset coordinate system, and wherein the feature information of the user comprises human eye information of the user, and wherein the second device is a human eye tracking apparatus;

obtaining (310), by the first device, second position information based on the first position information, wherein the second position information represents position information that is of multiple pieces of preset position information and whose distance in the preset coordinate system from the first position information is less than a preset threshold, wherein the preset position information whose distance from the first position information is smallest is selected as the second position information;

obtaining (311), by the first device, a first pre-distortion model comprising searching the at least two first pre-distortion models for the first pre-distortion model corresponding to the second position information; and

correcting (312), by the first device, a projected image based on the first pre-distortion model corresponding to the second position information, wherein the projected image is an image projected by the first device, wherein the projected image is the standard image adjusted based on the first pre-distortion model corresponding to the second position information.

2. The method according to claim 1, wherein the correcting, by the first device, a projected image based on the first pre-distortion model comprises:
performing, by the first device, image processing based on the first pre-distortion model by using one or more of a central processing unit CPU, a graphics processing unit GPU, and a field programmable gate array FPGA, to correct the projected image.

3. The method according to any one of claims 1 to 2, wherein the correcting, by the first device, a projected image based on the first pre-distortion model comprises:
performing, by the first device, light modulation based on the first pre-distortion model by using one or more of a liquid crystal on silicon LCOS, a digital light processing technology DLP, and a liquid crystal display LCD, to correct the projected image.

4. A display device, wherein the display device comprises a processor and a memory, the memory stores a computer program, and the processor executes the computer program stored in the memory, so that the display device performs the method according to any one of claims 1 to 3.

**5.** A human-computer interaction system, comprising:
a display device, configured to perform the method according to any one of claims 1 to 3.

**6.** A readable storage medium, configured to store instructions, wherein when the instructions are executed, the method according to any one of claims 1 to 3 is implemented.

**Patentansprüche**

**1.** Datenverarbeitungsverfahren, umfassend:

Empfangen (301) von mindestens zwei ersten Bildinformationen, die durch eine dritte Vorrichtung gesendet werden, durch eine erste Vorrichtung, wobei die erste Vorrichtung ein AR-HUD-Anzeigesystem ist und die dritte Vorrichtung eine Vorrichtung zur Simulation des menschlichen Auges ist, und wobei die mindestens zwei ersten Bildinformationen Informationen über ein durch die erste Vorrichtung projiziertes Bild darstellen, die durch die dritte Vorrichtung an verschiedenen Positionen in einem voreingestellten Koordinatensystem gesammelt werden;
lokales Ermitteln (302) eines Standardbildes durch die erste Vorrichtung, wobei das ermittelte Standardbild ein kalibriertes Standardbild ist;
separates Vergleichen (303) der mindestens zwei ersten Bildinformationen mit dem Standardbild durch die erste Vorrichtung, um mindestens zwei voreingestellte Verzerrungsmengen zu ermitteln;
separates Durchführen (304) einer Berechnung durch die erste Vorrichtung basierend auf den mindestens zwei voreingestellten Verzerrungsmengen, um mindestens zwei erste Vorverzerrungsmodelle zu ermitteln, wobei die mindestens zwei ersten Vorverzerrungsmodelle in einer Eins-zu-Eins-Entsprechung mit den ersten Bildinformationen stehen;
Empfangen (309) erster Positionsinformationen, die durch eine zweite Vorrichtung gesendet werden, durch die erste Vorrichtung, wobei die ersten Positionsinformationen Positionsinformationen von Merkmalsinformationen eines Benutzers in dem voreingestellten Koordinatensystem darstellen, und wobei die Merkmalsinformationen des Benutzers Informationen zum menschlichen Auge des Benutzers umfassen, und wobei die zweite Vorrichtung eine Einrichtung zur Verfolgung des menschlichen Auges ist;
Ermitteln (310) zweiter Positionsinformationen durch die erste Vorrichtung basierend auf den ersten Positionsinformationen, wobei die zweiten Positionsinformationen Positionsinformationen darstellen, die aus mehreren Teilen voreingestellter Positionsinformationen bestehen und deren Abstand in dem voreingestellten Koordinatensystem aus den ersten Positionsinformationen kleiner als ein voreingestellter Schwellenwert ist, wobei die voreingestellten Positionsinformationen, deren Abstand aus den ersten Positionsinformationen am kleinsten ist, als zweite Positionsinformationen ausgewählt werden;
Ermitteln (311) eines ersten Vorverzerrungsmodells durch die erste Vorrichtung, umfassend Durchsuchen der mindestens zwei ersten Vorverzerrungsmodelle nach dem ersten Vorverzerrungsmodell entsprechend den zweiten Positionsinformationen; und
Korrigieren (312) eines projizierten Bildes durch die erste Vorrichtung basierend auf dem ersten Vorverzerrungsmodell entsprechend den zweiten Positionsinformationen, wobei das projizierte Bild ein durch die erste Vorrichtung projiziertes Bild ist, wobei das projizierte Bild das Standardbild ist, das basierend auf dem ersten Vorverzerrungsmodell entsprechend den zweiten Positionsinformationen eingestellt ist.

**2.** Verfahren nach Anspruch 1, wobei das Korrigieren eines projizierten Bildes durch die erste Vorrichtung basierend auf dem ersten Vorverzerrungsmodell Folgendes umfasst:
Durchführen einer Bildverarbeitung durch die erste Vorrichtung basierend auf dem ersten Vorverzerrungsmodell unter Verwendung von einer oder mehreren von einer Zentralverarbeitungseinheit CPU, einer Grafikverarbeitungseinheit GPU und eines feldprogrammierbaren Gate-Arrays FPGA, um das projizierte Bild zu korrigieren.

**3.** Verfahren nach einem der Ansprüche 1 bis 2, wobei das Korrigieren eines projizierten Bildes durch die erste Vorrichtung basierend auf dem ersten Vorverzerrungsmodell Folgendes umfasst:
Durchführen einer Lichtmodulation durch die erste Vorrichtung basierend auf dem ersten Vorverzerrungsmodell unter Verwendung von einem oder mehreren von einem Flüssigkristall auf Silicium LCOS, einer digitalen Lichtverarbeitungstechnologie DLP und einer Flüssigkristallanzeige LCD, um das projizierte Bild zu korrigieren.

**4.** Anzeigevorrichtung, wobei die Anzeigevorrichtung einen Prozessor und einen Speicher umfasst, der Speicher ein Computerprogramm speichert und der Prozessor das in dem Speicher gespeicherte Computerprogramm ausführt, so dass die Anzeigevorrichtung das Verfahren nach einem der Ansprüche 1 bis 3 durchführt.

5. Mensch-Computer-Interaktionssystem, umfassend:
Anzeigevorrichtung, die dazu konfiguriert ist, das Verfahren nach einem der Ansprüche 1 bis 3 durchzuführen.

6. Lesbares Speichermedium, das dazu konfiguriert ist, Anweisungen zu speichern, wobei, wenn die Anweisungen ausgeführt werden, das Verfahren nach einem der Ansprüche 1 bis 3 implementiert wird.

**Revendications**

1. Procédé de traitement de données, comprenant :

la réception (301), par un premier dispositif, d'au moins deux premières informations d'image envoyées par un troisième dispositif, dans lequel le premier dispositif est un système d'affichage AR-HUD et le troisième dispositif est un dispositif de simulation de l'œil humain, et dans lequel les au moins deux premières informations d'image représentent des informations sur une image projetée par le premier dispositif collectées par le troisième dispositif à différentes positions dans un système de coordonnées prédéfini ;

l'obtention (302), localement par le premier dispositif, d'une image standard, dans lequel l'image standard obtenue est une image standard calibrée ;

la comparaison séparée (303), par le premier dispositif, des au moins deux premières informations d'image avec l'image standard pour obtenir au moins deux quantités de distorsion prédéfinies ;

la réalisation séparée (304), par le premier dispositif, d'un calcul sur la base des au moins deux quantités de distorsion prédéfinies, pour obtenir au moins deux premiers modèles de prédistorsion, dans lequel les au moins deux premiers modèles de prédistorsion sont en correspondance biunivoque avec les premières informations d'image ;

la réception (309), par le premier dispositif, de premières informations de position envoyées par un deuxième dispositif, dans lequel les premières informations de position représentent les informations de position d'informations de caractéristique d'un utilisateur dans le système de coordonnées prédéfini, et dans lequel les informations de caractéristique de l'utilisateur comprennent les informations relatives aux yeux de l'utilisateur, et dans lequel le deuxième dispositif est un appareil de suivi oculaire humain ;

l'obtention (310), par le premier dispositif, de secondes informations de position sur la base des premières informations de position, dans lequel les secondes informations de position représentent des informations de position qui sont composées de multiples informations de position prédéfinies et dont la distance dans le système de coordonnées prédéfini par rapport aux premières informations de position est inférieure à un seuil prédéfini, dans lequel les informations de position prédéfinies dont la distance par rapport aux premières informations de position est la plus petite sont sélectionnées comme secondes informations de position ;

l'obtention (311), par le premier dispositif, d'un premier modèle de prédistorsion comprenant la recherche, parmi les au moins deux premiers modèles de prédistorsion, du premier modèle de prédistorsion correspondant aux secondes informations de position ; et

la correction (312), par le premier dispositif, d'une image projetée sur la base du premier modèle de prédistorsion correspondant aux secondes informations de position, dans lequel l'image projetée est une image projetée par le premier dispositif,

dans lequel l'image projetée est l'image standard ajustée sur la base du premier modèle de prédistorsion correspondant aux secondes informations de position.

2. Procédé selon la revendication 1, dans lequel la correction, par le premier dispositif, d'une image projetée sur la base du premier modèle de prédistorsion comprend :
la réalisation, par le premier dispositif, d'un traitement d'image sur la base du premier modèle de prédistorsion en utilisant l'un ou plusieurs d'une unité centrale de traitement, CPU, d'une unité de traitement graphique, GPU, et d'un réseau de portes programmables, FPGA, pour corriger l'image projetée.

3. Procédé selon l'une quelconque des revendications 1 et 2, dans lequel la correction, par le premier dispositif, d'une image projetée sur la base du premier modèle de prédistorsion comprend : la réalisation, par le premier dispositif, d'une modulation de lumière sur la base du premier modèle de prédistorsion en utilisant l'un ou plusieurs d'un dispositif à cristaux liquides sur silicium, LCOS, d'une technologie de traitement numérique de la lumière, DLP, et d'un affichage à cristaux liquides, LCD, pour corriger l'image projetée.

**4.** Dispositif d'affichage, dans lequel le dispositif d'affichage comprend un processeur et une mémoire, la mémoire stocke un programme informatique, et le processeur exécute le programme informatique stocké dans la mémoire, de sorte que le dispositif d'affichage réalise le procédé selon l'une quelconque des revendications 1 à 3.

**5.** Système d'interaction homme-machine, comprenant :
un dispositif d'affichage configuré pour réaliser le procédé selon l'une quelconque des revendications 1 à 3.

**6.** Support de stockage lisible, configuré pour stocker des instructions, dans lequel lorsque les instructions sont exécutées, le procédé selon l'une quelconque des revendications 1 à 3 est mis en œuvre.

Projected
virtual image

Calculation
processing unit

HUD display
system

FIG. 1

Projected
virtual image

**Field of view space**

**Human eye simulation device**

Calculation
processing unit

HUD display system

FIG. 2

| Third device | First device | Second device |
|---|---|---|

301: At least two pieces of first image information

302: Obtain standard image information

303: Separately compare the at least two pieces of first image information with the standard image information to obtain at least two preset distortion amounts

304: Separately perform calculation based on the at least two preset distortion amounts, to obtain at least two first pre-distortion models

305: Collect second image information

306: Perform calculation by using a feature recognition algorithm to obtain feature position information of the feature information in the second image information

307: The second device collects depth information

308: Perform calculation by using the feature position information and the depth information to obtain first position information

309: First position information

310: Obtain second position information based on the first position information

311: Obtain a first pre-distortion model corresponding to the second position information

312: Correct the projected image based on the first pre-distortion model

FIG. 3

```
┌─────────────────────┐                          ┌─────────────────────┐
│    AR-HUD display    │                          │  Human eye tracking │
│       system         │                          │      apparatus       │
└─────────────────────┘                          └─────────────────────┘
          │                                                   │
          │                          ┌─────────────────────────────────────────┐
          │                          │ 401: Collect second image information     │
          │                          └─────────────────────────────────────────┘
          │                                                   │
          │                          ┌─────────────────────────────────────────┐
          │                          │ 402: Perform calculation by using a       │
          │                          │ feature recognition algorithm to obtain   │
          │                          │ feature position information of feature    │
          │                          │ information in the second image information│
          │                          └─────────────────────────────────────────┘
          │                                                   │
          │                          ┌─────────────────────────────────────────┐
          │                          │ 403: Collecting depth information          │
          │                          └─────────────────────────────────────────┘
          │                                                   │
          │                          ┌─────────────────────────────────────────┐
          │                          │ 404: Perform calculation by using the      │
          │                          │ feature position information and the depth  │
          │                          │ information to obtain first position         │
          │                          │ information                                 │
          │                          └─────────────────────────────────────────┘
          │                                                   │
          │                          ┌─────────────────────────────────────────┐
          │                          │ 405: Obtains gaze information of a user     │
          │                          └─────────────────────────────────────────┘
          │        406: First position information and
          │◄────────────── gaze information ──────────────────┤
┌─────────────────────────────────────────┐                 │
│ 407: Determine a first field of view range │                 │
│ based on the gaze information              │                 │
└─────────────────────────────────────────┘                 │
          │                                                   │
┌─────────────────────────────────────────┐                 │
│ 408: Determine a first distortion amount   │                 │
│ based on the gaze information and the first │                 │
│ position information                        │                 │
└─────────────────────────────────────────┘                 │
          │                                                   │
┌─────────────────────────────────────────┐                 │
│ 409: Obtain a first pre-distortion model   │                 │
│ based on the first field of view range and  │                 │
│ the first distortion amount                 │                 │
└─────────────────────────────────────────┘                 │
          │                                                   │
┌─────────────────────────────────────────┐                 │
│ 410: Correct the projected image based on   │                 │
│ the first pre-distortion model              │                 │
└─────────────────────────────────────────┘                 │
          │                                                   │
```

FIG. 4

$Y_c$

$Z_c$

$(x_c, y_c, \text{and } z_c)$

$(0, 0, 0)$

$X_c$

Camera coordinate system

FIG. 5

$Y_w$

$(x_w, y_w, \text{and } z_w)$

$Z_w$

HUD

$X_w$

World coordinate system

FIG. 6

Image coordinate system

FIG. 7

FIG. 8

Receiving unit — 901

Processing unit — 902

Correction unit — 903

Determining unit — 905

Obtaining unit — 904

FIG. 9

Obtaining unit — 1001

Sending unit — 1002

FIG. 10

Obtaining unit — 1101

Sending unit — 1102

Collection unit — 1103

Processing unit — 1104

FIG. 11

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20170135522

- CN 209542964 U